(19) Europäisches Patentamt
European Patent Office
Office européen des brevets

(11) **EP 1 974 784 A1**

(12) **EUROPEAN PATENT APPLICATION**
published in accordance with Art. 158(3) EPC

(43) Date of publication:
**01.10.2008 Bulletin 2008/40**

(51) Int Cl.:
***B01D 17/04*** *(2006.01)* ***D04H 1/42*** *(2006.01)*

(21) Application number: **06842830.9**

(86) International application number:
**PCT/JP2006/324999**

(22) Date of filing: **08.12.2006**

(87) International publication number:
**WO 2007/066826 (14.06.2007 Gazette 2007/24)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **09.12.2005 JP 2005355714**

(71) Applicant: **Sumitomo Chemical Company, Limited Tokyo 104-8260 (JP)**

(72) Inventor: **OKUBO, Yoshihito Toyonaka-shi, Osaka (JP)**

(74) Representative: **Vossius & Partner Siebertstrasse 4 81675 München (DE)**

(54) **OIL/WATER SEPARATION FILTER AND OIL/WATER SEPARATOR**

(57) The present invention provides a filter for oil-water separation comprising water-repellent resin fiber and inorganic fiber. Further, the present invention provides a device for oil-water separation and a method for oil-water separation, using the filter.

Fig. 2

**Description**

Technical Field

The present invention relates to a filter for oil-water separation and a device for oil-water separation, separating an oil-water mixture contained in the form of emulsion into an oil phase and an aqueous phase.

Background Art

Extraction operations such as extraction of useful substances contained in an aqueous phase into an oil phase, or extraction of salts and the like contained in an oil phase into an aqueous phase before separation of the aqueous phase and oil phase to remove useful substances and salts are performed widely as a unit operation in environmental businesses such as waste water treatment and the like, medicinal and agricultural chemical industry, chemical industry, food industry and the like. The extraction operation is usually an operation of preparing an oil-water mixture in the form of fine droplets(emulsion) composed of an aqueous phase and an oil phase before separating again into an oil phase and an aqueous phase, however, there is a problem that the droplets contained in the oil-water mixture are not coalesced quickly, leading resultantly to an intermediate phase containing fine particles composed of an aqueous phase and an oil phase, thus, it can be handled neither as an aqueous phase nor an oil phase.

As a solution method for such a problem, a method is known for permeating an oil-water mixture using an oil-water separation film composed of water-repellent resin fiber typified by a fluoride resin film made of poly(vinylidene fluoride) (polyvinyl difluoride) or the like (for example, JP-H09-308803-A).

According to investigation of the present invention, however, a problem has been clarified that when water-repellency is strong, pressure loss in a filter in permeation of an oil-water mixture (difference between charged pressure at an inlet of the filter and pressure at an outlet of the filter) increases since an oil-water mixture contains also water, thus, when the same pressure is applied to the filter, its permeation time is longer as compared with a mixture needed smaller pressure loss, and if larger pressure is charged for shortening the permeation time, a larger load is applied to the apparatus.

DISCLOSURE OF THE INVENTION

The present invention has an object of providing a filter for oil-water separation causing smaller pressure loss in a filter in permeation of an oil-water mixture, and a device for oil-water separation and a method for oil-water separation using this.

That is, the present invention includes the followings.

<1> A filter for oil-water separation comprising water-repellent resin fiber and inorganic fiber.

<2> The filter according to <1>, wherein the filter is the one having filmy structure.

<3> The filter according to <1> or <2>, wherein the filter is woven cloth comprising the water-repellent resin fiber and inorganic fiber.

<4> The filter according to <3>, wherein the filter is woven cloth formed by yarns of the water-repellent resin fibers and yarns of inorganic fibers.

<5> The filter according to <3>, wherein the filter is formed by woven cloth comprising yarns mix-spun by the water-repellent resin fiber and inorganic fiber.

<6> The filter according to <1> or <2>, wherein the filter is non-woven cloth comprising the water-repellent resin fiber and inorganic fiber.

<7> The filter according to <6>, wherein the filter is non-woven cloth obtained by stacking in layers intimate blends prepared by blending the water-repellent resin fiber and inorganic fiber, applying load, then, performing needle processing.

<8> The filter according to any one of <1> to <7>, wherein the water-repellent resin is at least one resin selected from the group consisting of polyolefin, fluoride resin, poly(vinyl chloride) and poly(vinylidene chloride).

<9> The filter according to any one of <1> to <8>, wherein the inorganic fiber is glass fiber.

<10> The filter according to any one of <1> to <9>, wherein the weight ratio of the water-repellent resin fiber/inorganic fiber is 90/10 to 10/90.

<11> A device for oil-water separation, which comprises a filter comprising water-repellent resin fiber and inorganic fiber, an inlet for oil-water mixture, a holder for fixing the filter and an outlet for oil-water separated liquid.

<12> The device according to <11>, wherein the device is a filtrating device and the inlet and the outlet in the device are separated by the filter on either side of the filter.

<13> A method for separating emulsion formed by an aqueous phase and an oil phase, which comprises contacting the emulsion with a filter for oil-water separation containing water-repellent resin fiber and inorganic fiber, to separate the aqueous phase and oil phase from the emulsion.

<14> The method according to <13>, wherein the contact is permeation of the emulsion through the filter for oil-water separation.

BRIEF EXPLANATION OF DRAWINGS

Fig. 1 is a particle size distribution diagram of an emulsion used in an example (ordinate: particle size distribution reduced by volume [-], abscissa: particle size [$\mu$m])

Fig. 2 shows a filtering device 2 containing a filter 1 for oil-water separation, and (a) is a plan view of the filtering device, (b) is a sectional view (before fabrication) of the filtering device, and (c) is a sectional view (after fabrication) of the filtering device.

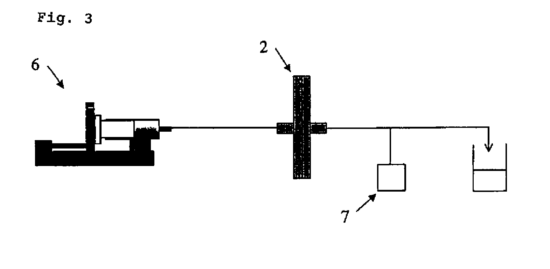

Fig. 3 shows a schematic view of oil-water separation shown in an example. Explanation of Marks

1: filter for oil-water separation
2: filtering device
3: outlet of filtering device (outer diameter: 6 mm $\phi$ )
4: O-ring (diameter: 25.6 mm$\phi$, wire diameter: 2.4 mm$\phi$)
5: O-ring (diameter: 34.7 mm$\phi$, wire diameter: 3.5 mm$\phi$)
6: micro syringe pump
7: hydraulic gauge

BEST MODES FOR CARRYING OUT THE INVENTION

The present invention will be described in detail below.

Examples of the water-repellent resin fiber to be used in the present invention include fibers of polyolefins such as polyethylene, polypropylene, polystyrene, ethylenepropylene copolymer and the like; fluoride resin fibers such as polytetrafluoroethylene, polytrifluoroethylene, polychlorotrifluoroethylene, poly(vinylidene fluoride) and the like; poly(vinyl chloride): and poly(vinylidene chloride).

The water-repellent resin fiber may be fiber consisting of at least two kinds of resins.

The water-repellent resin fiber usually has a width of 1 mm or less, preferably 5 to 100 $\mu$m, and has a length of usually 10-fold or more of the width. Yarns made of a water-repellent resin also belong to the water-repellent resin fiber of the present invention.

Among the water-repellent resin fibers, fluorine resin fiber is preferred because coalescence between oil-drops is easily happened when the oil-drops contact with the fibers and an oil phase tends to be easily formed.

Examples of the inorganic fiber include fibers of metals such as iron, aluminum, stainless and the like; glass fiber: and ceramic fibers such as alumina fiber, alumina-silica fiber, zirconia fiber and the like.

The inorganic fiber usually has a width of 100 $\mu$m or less, preferably about 5 to 20 $\mu$m, and a length of 10-fold or more of the width.

The inorganic fiber may be fiber consisting of at least two kinds of inorganic materials. As the inorganic fiber, glass fiber is preferred because unification between water-drops is easily happened when the water-drops contact with the fibers and an aqueous phase tends to be easily formed.

The filter for oil-water separation of the present invention comprises water-repellent resin fiber and inorganic fiber. The filter for oil-water separation has a content ratio (by weight) of water-repellent resin fiber/inorganic fiber of usually 90/10 to 10/90, preferably 80/20 to 40/60.

When the proportion of the water-repellent resin fiber is 90 or less, there is a preferable tendency of an excellent effect of reduction of pressure loss in a filter, and when 10 or more, there is a preferable tendency of improvement in oil-water separation speed.

The filter for oil-water separation of the present invention usually has filmy structure.

In the present invention, the film usually means a molded body having a thickness of about 0.1 to 50 mm, preferably about 0.5 to 10 mm, and non-woven cloths and woven cloths having such extent of thickness are included. The shape includes sheet, cylinder and the like.

Here, the non-woven cloth of the filter for oil-water separation is cloth obtained by allowing fibers of a thin-layered fiber aggregate (web) formed by short fiber (staple) or long fiber (filament) of water-repellent resin fiber and inorganic fiber to mutually join by a mechanical operation, adhesive or heat fusion force of the fiber itself, and processing the joined body.

The woven cloth of the filter for oil-water separation includes, for example, woven cloths formed by yarns of water-repellent resin fibers and yarns of inorganic fibers, for example, woven cloths containing yarns mix-spun by water-repellent resin fiber and inorganic fiber, and the like'.

As the filter for oil-water separation of the present invention, preferable among others are woven cloths and non-woven cloths formed by yarns of water-repellent resin fibers and yarns of inorganic fibers owing to easy production, and particularly, non-woven cloths obtained by stacking in layers intimate blends prepared by blending water-repellent resin fiber and inorganic fiber, applying load, then, performing needle processing as described in JP-S57-205566-A, JP-S61-160466-A and the like are preferable since they are commercially available. Specific examples of the commercially available filters include Bug Filter filtering cloth and, Tefire (registered trade mark, sold by Toray Industries, Inc.) marketed as a dust collection filter in an incineration system, and the like.

Films formed of fiber in which the surface of inorganic fiber is coated completely with a water-repellent resin (for example, films formed of fiber having sheathecore structure) are not preferable since an oil-water mixture does not contact with both water-repellent resin fiber and inorganic fiber, thus, coalescence of oil-drops is not happened, or pressure loss in the filter is not decreased.

The filter for oil-water separation of the present invention can be used for oil-water separation and demulsification of an emulsion generating in an extraction operation used in various industries, and treatment of an intermediate phase formed of an oil phase and an aqueous phase generated in waste water treatment, and the like.

The device for oil-water separation of the present invention comprises a filter for oil-water separation of the present invention, an inlet for oil-water mixture, a holder for fixing the oil-water separation filter and an outlet for oil-water separated liquid. As the device for oil-water separation, a filtering device is mentioned, and for example, a filtrating device having structure in which an inlet and an outlet in the device are separated by a filter fixed by a holder on either side of the filter is mentioned. Specifically mentioned are filtering devices having an inlet, a holder for fixing filtering cloth and an outlet wherein a filter for oil-water separation of the present invention is amounted on the filtering cloth portion, such as a Hunder filtration device and the like. By passing an oil-water mixture through this filtration device from the inlet via the filter for oil-water separation to the outlet, liquid separated into two phases of oil and water can be obtained.

For example, if an filter for oil-water separation of the present invention is applied instead of a metal net in Coreressor (described, for example, in JP-2572068-B), one embodiment of the above-described filtering device is obtained.

When a filter for oil-water separation of the present invention is used in a filtering device, pressure applied to an inlet of the filtering device (permeation pressure) is usually about 0.01 [Pa] to $100 \times 10^5$ [Pa]. When $100 \times 10^5$ [Pa] or lower, there is a preferable tendency that pressure-resistance of the filtering device lowers, or possibility of breakage of the filter for oil-water separation lowers, while when 0.01 [Pa] or higher, there is a preferable tendency that oil-water separation is carried out sufficiently and liquid-separation time is shortened.

Additionally, for example, if a filter for oil-water separation of the present invention is applied instead of a brush in a specific gravity difference separation apparatus utilizing cyclone described in JP-2001-321605-A, a device for oil-water separation of the present invention is obtained likewise, and oil-water separation can be carried out likewise.

The emulsion to be used in the present invention is a system in which liquid droplets are dispersed in other liquid not dissolving the liquid droplets, and examples thereof include a system containing drops of an oil phase dispersed in an aqueous phase, a system containing droplets of an aqueous phase dispersed in an oil phase, and the like. Here, the aqueous phase is a phase composed mainly of water, and specifically, a phase composed of 90 wt% or more, preferably 95 wt% or more of water. The oil phase is a phase composed mainly of an organic solvent, and specifically, a phase composed of 90 wt% or more, preferably 95 wt% or more of an organic solvent.

Regarding the emulsion, the liquid-separation speed when the emulsion is allowed to stand still is preferably 0.05 m/hr or more.

Examples of the organic solvent include aromatic hydrocarbons such as benzene, toluene, xylene and the like; aliphatic hydrocarbons such as heptane, hexane, heptane, octane, nonane, decane, dodecane, tridecane and the like; alicyclic hydrocarbons such as cyclopentane, cyclohexane and the like; halogenated hydrocarbons such as methylene chloride, chloroform, chlorobenzene and the like; ethers such as dimethyl ether, diethyl ether, ethylene glycol dimethyl ether, propylene glycol dibutyl ether, tetrahydrofuran and the like; methyl isobutyl ketone; and butyl acetate.

As the organic solvent, aromatic hydrocarbons, aliphatic hydrocarbons and alicyclic hydrocarbons are suitably used.

The present invention will be illustrated further specifically by examples mentioned below. In examples, "part" and "%" are by weight unless otherwise stated. Example 1

<Preparation of emulsion>

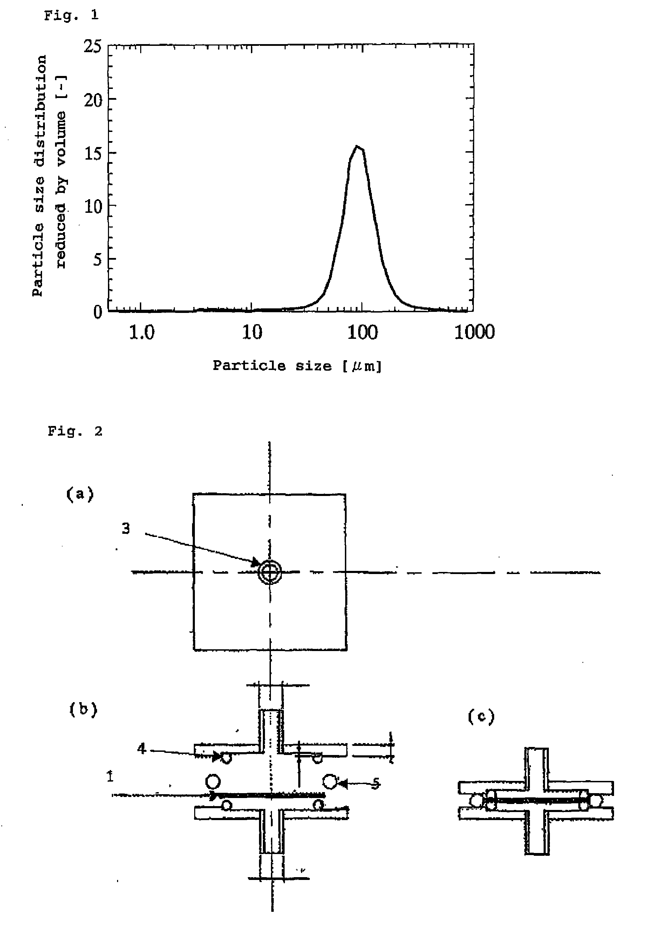

An emulsion was produced using Micro Mixer (manufactured by IMM, standard single mixer) feeding dodecane at a rate of 0.3 ml/min. and water at a rate of 2.7 ml/min. The particle size distribution of this emulsion was measured using laser diffraction-scattering type particle size distribution meter (HORIBA, LA-920) and the results are shown in Fig. 1.

<Oil-water separation>

Tefire (registered trade mark: Tefire, 1.3 mm thick, 8 mmϕ) containing 75 wt% of fluoride resin fiber as a kind of water-repellent resin fiber and 25 wt% of glass fiber as a kind of inorganic fiber was incorporated as a filter for oil-water separation into a filtering device as shown in Fig. 2. Subsequently, a micro syringe pump (6, Kd Scientific, IC3210), filtering device 2 and hydraulic meter (7, VALCOM, VSST1-A4) were mounted, and the above-described emulsion was fed from the pump 6 to the filtering device 2. The results are shown in Table 1. Oil droplets (dodecane) contained in the emulsion at the outlet of the filtering device 2 were all separated into an oil phase and an aqueous phase, and the size distribution of oil droplets in the liquid at the outlet was not detected.

Here, $\alpha$ is a physical value showing permeability of the filter against permeation pressure (pressure difference in the filter), and defined in the formula (1). Air permeability [Pa$^{-1}$] is a physical value of the filter measured by a method shown in JIS L 1096 8.27.

$$V = \alpha \times A \times P \qquad (1)$$

V: filter permeation flow rate [cm$^3$•cm$^{-2}$•sec$^{-1}$]
$\alpha$: physical value [Pa$^{-1}$] showing permeability of the filter against permeation pressure
A: Air permeability [cm$^3$•cm$^{-2}$•sec$^{-1}$]
P: pressure [Pa]

(Example 2 and Comparative Example 1)

Tests were carried out in the same manner as in Example 1 excepting that Tefire (registered trade mark: Tefire HG Technology, 2.1 mm thick) containing 50 wt% of fluoride resin fiber and 50 wt% of glass fiber was used in Example 2 and (product number: BF-700SR, 1.15 thickness) composed of only fluoride resin fiber was used in Comparative Example, as a filter for oil-water separation. The results are summarized in Table 1. Oil drops (dodecane) contained in the emulsion in the outlet line were all demulsified, and the particle size distribution of oil drops in the outlet liquid was not detected.

As shown in Table 1, when the glass fiber ratio becomes higher, the value of $\alpha$ becomes larger, thus, increase in permeation performance of the filter against permeation pressure can be confirmed.

| Fluoride resin fiber/glass fiber (weight ratio) | | 100/0 | 75/25 | 50/50 |
|---|---|---|---|---|
| Thickness of filter | [mm] | 1.15 | 1.3 | 2.1 |
| Air permeability | [cm$^3 \cdot$ cm$^{-2} \cdot$ sec$^{-1}$] | 18.2 | 25 | 25 |
| Oil-water mixture amount | [cm$^3 \cdot$ min$^{-1}$] | 10 | 10 | 10 |
| Liquid falling area of filter | [cm$^2$] | 6.15 | 6.15 | 6.15 |
| Permeation pressure | [Pa] | 2 | 1 | 0.5 |
| Filter permeation flow rate | [cm$^3 \cdot$ cm$^{-2} \cdot$ sec$^{-1}$] | 1.625 | 1.625 | 1.625 |
| $\alpha$ | [Pa$^{-1}$] | 0.0446 | 0.0650 | 0.1300 |

The filter for oil-water separation of the present invention contains hydrophilic inorganic fiber and the like, thus, pressure loss in the filter for oil-water separation in permeation of an oil-water mixture is lowered, and the filtration time is shortened when the pressure difference in the filter is constant, as compared with a film composed of only a water-repellent fluoride resin. Further, the resultant oil-water mixture is almost separated into an oil phase and an aqueous phase, scarcely generating an intermediate phase.

**Claims**

1. A filter for oil-water separation comprising water-repellent resin fiber and inorganic fiber.

2. The filter according to Claim 1, wherein the filter is the one having filmy structure.

3. The filter according to Claim 2, wherein the filter is woven cloth comprising the water-repellent resin fiber and inorganic fiber.

4. The filter according to Claim 3, wherein the filter is woven cloth formed by yarns of the water-repellent resin fibers and yarns of inorganic fibers.

5. The filter according to Claim 3, wherein the filter is formed by woven cloth comprising yarns mix-spun by the water-repellent resin fiber and inorganic fiber.

6. The filter according to Claim 2, wherein the filter is non-woven cloth comprising the water-repellent resin fiber and inorganic fiber.

7. The filter according to Claim 6, wherein the filter is non-woven cloth obtained by stacking in layers intimate blends prepared by blending the water-repellent resin fiber and inorganic fiber, applying load, then, performing needle processing.

8. The filter according to Claim 1, wherein the water-repellent resin is at least one resin selected from the group consisting of polyolefin, fluoride resin, poly(vinyl chloride) and poly(vinylidene chloride).

9. The filter according to Claim 1, wherein the inorganic fiber is glass fiber.

10. The filter according to Claim 1, wherein the weight ratio of the water-repellent resin fiber/inorganic fiber is 90/10 to 10/90.

11. A device for oil-water separation, which comprises a filter comprising water-repellent resin fiber and inorganic fiber, an inlet for oil-water mixture, a holder for fixing the filter and an outlet for oil-water separated liquid.

12. The device according to Claim 11, wherein the device is a filtrating device and the inlet and the outlet in the device are separated by the filter on either side of the filter.

13. A method for separating emulsion formed by an aqueous phase and an oil phase, which comprises contacting the emulsion with a filter for oil-water separation containing water-repellent resin fiber and inorganic fiber, to separate the aqueous phase and oil phase from the emulsion.

14. The method according to Claim 13, wherein the contact is permeation of the emulsion through the filter for oil-water separation.

Fig. 1

Fig. 2

(a)

(b)

(c)

Fig. 3

## INTERNATIONAL SEARCH REPORT

| International application No. |
| --- |
| PCT/JP2006/324999 |

**A. CLASSIFICATION OF SUBJECT MATTER**
*B01D17/04(2006.01)i, D04H1/42(2006.01)i*

According to International Patent Classification (IPC) or to both national classification and IPC

**B. FIELDS SEARCHED**

Minimum documentation searched (classification system followed by classification symbols)
B01D17/04, D04H1/42

Documentation searched other than minimum documentation to the extent that such documents are included in the fields searched
Jitsuyo Shinan Koho     1922-1996   Jitsuyo Shinan Toroku Koho   1996-2007
Kokai Jitsuyo Shinan Koho   1971-2007   Toroku Jitsuyo Shinan Koho   1994-2007

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2001-200457 A (JSR Corp.), 27 July, 2001 (27.07.01), | 1,2,6,8,9, 11-14 |
| Y | Claims; Par. Nos. [0023], [0036] (Family: none) | 7 |
| Y | JP 57-205566 A (E.I. Du Pont De Nemours & Co.), 16 December, 1982 (16.12.82), Claims & US 4361619 A | 7 |
| Y | JP 61-160466 A (E.I. Du Pont De Nemours & Co.), 21 July, 1986 (21.07.86), Claims & US 4361619 A | 7 |

☒ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 06 February, 2007 (06.02.07) | 13 February, 2007 (13.02.07) |

| Name and mailing address of the ISA/ Japanese Patent Office | Authorized officer |
| --- | --- |
| Facsimile No. | Telephone No. |

Form PCT/ISA/210 (second sheet) (April 2005)

**INTERNATIONAL SEARCH REPORT**

| International application No. |
| --- |
| PCT/JP2006/324999 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 7-275602 A (NGK Spark Plug Co., Ltd.), 24 October, 1995 (24.10.95), Figs. 4 to 6; Par. Nos. [0030] to [0036] (Family: none) | 1-14 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H09308803 A
- JP S57205566 A
- JP S61160466 A
- JP 2572068 B
- JP 2001321605 A